# FASCICULE DE BREVET EUROPEEN

(11) **EP 2 707 199 B1**
(45) Date de publication et mention de la délivrance du brevet: **21.01.2015**
(21) Numéro de dépôt: 12725091.8
(22) Date de dépôt: 03.05.2012
(51) Int. Cl.: B29C 70/48, B29D 99/00, B29C 33/30

(54) **MOULE DE COMPACTAGE ET D'INJECTION POUR PREFORME FIBREUSE DESTINEE A LA FABRICATION D'UNE AUBE DE REDRESSEUR DE TURBOMACHINE EN MATERIAU COMPOSITE**
VERDICHTUNGS- UND SPRITZGIESSFORM FÜR FASERVORFORMLING ZUR HERSTELLUNG EINER TURBOMASCHINEN- GLEICHRICHTERSCHAUFEL AUS VERBUNDSTOFF
COMPACTING AND INJECTION MOULD FOR FIBROUS PREFORM INTENDED FOR THE MANUFACTURE OF A TURBOMACHINE FLOW-STRAIGHTENER VANE MADE OF COMPOSITE MATERIAL

(30) Priorité: 10.05.2011 FR 1154017
(43) Date de publication de la demande: 19.03.2014
(73) Titulaire: SNECMA, 75015 Paris (FR)
(72) Inventeur: PLANTE, Romain, F-77210 Avon (FR); LACROIX, Lise, F-77000 Melun (FR); PATRIGEON, Olivier, F-92000 Nanterre (FR); CAUCHOIS, Jean-Pierre, F-67510 Obersteinbach (FR); BUREK, Pascal, F-54160 Pulligny (FR)
(74) Mandataire: Boura, Olivier
(86) Numéro de dépôt international: PCT/FR2012/050983
(87) Numéro de publication internationale: WO 2012/153039

(56) Documents cités:
- EP-A1- 0 446 851
- EP-A1- 0 770 463
- EP-A1- 1 364 770
- FR-A1- 2 940 172

## Description

### Arrière-plan de l'invention

La présente invention se rapporte au domaine général de la fabrication d'une aube de redresseur de turbomachine en matériau composite.

Un domaine d'application privilégiée de l'invention est celui des aubes directrices de sortie (ou OGV pour « Outlet Guide Vane ») du compresseur basse-pression d'une turbomachine aéronautique.

De manière habituelle, une aube de redresseur de turbomachine en matériau composite est fabriquée à partir d'une préforme fibreuse (obtenue par tissage tridimensionnel ou par drapage d'un tissu bidimensionnel) que l'on place dans un moule de compactage et d'injection dont la forme et les dimensions du logement interne correspondent à celles de la pièce finale moulée. Une fois le moule fermé de façon étanche, une résine thermodurcissable est injectée dans tout le logement pour imprégner la préforme et l'ensemble est chauffé afin de polymériser la résine. Après cette étape de polymérisation, le moule est ouvert et la pièce finale moulée qui en est extraite forme une aube de redresseur aux formes et aux dimensions requises pour être utilisée.

Le document EP 0770463 A1 divulgue un moule d'injection et de compactage conformément au préambule de la revendication 1.

La réalisation d'un moule de compactage et d'injection pour ce type de fabrication doit respecter un certain nombre de contraintes. D'une part, le moule une fois fermé doit être parfaitement étanche à la résine que l'on injecte. D'autre part, la préforme fibreuse placée à l'intérieur du moule doit être suffisamment et correctement compactée afin de maîtriser le taux de fibres final de la pièce obtenue. En effet, il est connu que lors de la réalisation de la préforme fibreuse, le tissage entraîne un foisonnement des fibres créant une surépaisseur de la préforme qu'il est nécessaire de résorber.

La réalisation de moules de compactage et d'injection présentant de telles contraintes a déjà été envisagée. On connaît par exemple un moule qui est formé de plusieurs parties assemblées et maintenues entre elles par boulonnage, chaque partie du moule venant, après boulonnage, exercer un effort sur l'une des surfaces de la préforme fibreuse. Cependant, une aube de redresseur de turbomachine présente une forme géométrique relativement complexe de sorte que la réalisation d'un tel moule pour ce type de pièce requiert un grand nombre de pièces qui sont en pratique complexes à assembler tout en garantissant une parfaite étanchéité.

On connaît également un moule de compactage et d'injection dont la fermeture est obtenue par l'intermédiaire d'une presse exerçant un effort dans une seule direction, des colonnettes de renvois d'effort liées à des parties mobiles du moule permettant d'exercer des efforts de compactage selon différentes autres directions. Toutefois, les efforts nécessaires pour compacter une pièce telle qu'une aube de redresseur de turbomachine amènent à la réalisation de moules complexes et peu fiables.

Le document EP 0446 851 A1 divulgue un moule de compactage pour préformes fibreuses complexes comprenant des cales de compactage et de fermeture.

### Objet et résumé de l'invention

La présente invention a donc pour but principal de pallier de tels inconvénients en proposant un moule de compactage et d'injection simple de mise en oeuvre, assurant un bon compactage des différentes faces d'une pièce aussi complexe géométrique qu'une aube de redresseur de turbomachine et dont l'étanchéité à la résine est fiable.

Conformément à l'invention, ce but est atteint grâce à un moule de compactage et d'injection comprenant une carcasse formant auge destinée à recevoir la préforme fibreuse et fermée par un couvercle inférieur et un couvercle supérieur sensiblement plans, des cales de compactage disposées à l'intérieur de l'auge avec chacune une surface en appui normal contre une surface à compacter de la préforme fibreuse, et des cales de fermeture disposées à l'intérieur de l'auge, chaque cale de fermeture ayant une surface en appui normal contre une surface d'une cale de compactage et étant dépourvue de surface en contact avec la préforme fibreuse.

Les cales de compactage du moule selon l'invention sont mises en appui normal (c'est-à-dire selon une direction sensiblement perpendiculaire) contre toutes les surfaces de la préforme fibreuse. En d'autres termes, à chaque surface de la préforme fibreuse devant être compactée est associée une cale de compactage en appui normal contre celle-ci. Les cales de fermeture sont intercalées entre les cales de compactage et les parois latérales de l'auge afin de maintenir les cales de compactage en appui contre les différentes surfaces de la préforme fibreuse. Quant aux couvercles inférieur et supérieur, ils permettent de fermer l'ensemble tout en assurant une parfaite étanchéité à la résine (entre deux surfaces planes) et ils facilitent le démoulage ultérieur de l'ensemble.

La séparation des fonctions entre cales de compactage et cales de fermeture permet ainsi de faciliter la réalisation du moule compte tenu notamment de la forme géométrique particulière de la préforme fibreuse pour la fabrication d'une aube de redresseur de turbomachine.

De préférence, les cales de compactage et les cales de fermeture présentent un coefficient de dilatation thermique supérieur à celui de l'auge et des couvercles. La présence d'une différence de dilatation thermique permet de fermer le moule de compactage « à froid » sans compacter complètement la préforme fibreuse, le compactage final se produisant « à chaud » lors de l'étape de polymérisation de la résine.

L'auge peut comprendre des parois latérales dont la surface intérieure est sensiblement inclinée par rapport à un plan normal aux couvercles inférieur et supérieur. Cette inclinaison facilite la mise en place des cales de fermeture intercalées entre les parois latérales de l'auge et certaines cales de compactage.

Par ailleurs, dans le cas où la préforme fibreuse est destinée à la fabrication d'une aube de turbomachine, le moule peut comprendre une première cale de compactage ayant une surface destinée à venir en appui normal contre une surface de la préforme fibreuse constitutive de l'intrados de la pale de l'aube, une deuxième cale de compactage ayant une surface destinée à venir en appui normal contre une surface de la préforme fibreuse constitutive de l'extrados de la pale de l'aube, une troisième cale de compactage ayant une surface destinée à venir en appui normal contre une surface de la préforme fibreuse constitutive de la plateforme supérieure de l'aube, une quatrième cale de compactage ayant une surface destinée à venir en appui normal contre une surface de la préforme fibreuse constitutive de la plateforme inférieure de l'aube, et une cinquième et une sixième cales de compactage ayant des surfaces destinées à venir en appui normal contre des surfaces de la préforme fibreuse constitutives des brides amont et aval de l'aube.

Dans ce cas, au moins l'une des cales de compactage peut être formée en au moins deux parties distinctes de façon à faciliter leur démoulage.

Toujours dans ce cas, le moule peut comprendre une première cale de fermeture ayant une surface destinée à venir en appui normal contre une surface de la troisième cale de compactage opposée à celle venant en appui contre la surface de la préforme fibreuse constitutive de la plateforme supérieure de l'aube, une deuxième cale de fermeture ayant une surface destinée à venir en appui normal contre une surface de la quatrième cale de compactage opposée à celle venant en appui contre la surface de la préforme fibreuse constitutive de la plateforme inférieure de l'aube, et une troisième et une quatrième cales de fermeture ayant des surfaces destinées à venir en appui normal contre des surfaces de la cinquième et sixième cales de compactage opposées à celles venant en appui contre les surfaces de la préforme fibreuse constitutives des brides amont et aval de l'aube.

L'invention a également pour objet un procédé d'assemblage d'un moule de compactage et d'injection tel que défini précédemment, ce procédé consistant successivement à assembler de façon étanche le couvercle inférieur sur l'auge, positionner la préforme fibreuse destinée à la fabrication d'une pièce de turbomachine et les cales de compactage à l'intérieur de l'auge, positionner les cales de fermeture à l'intérieur de l'auge, et assembler de façon étanche le couvercle supérieur sur l'auge.

Des dispositifs pour appliquer un effort normal sur les cales de compactage peuvent avantageusement être positionnés à l'intérieur de l'auge préalablement au positionnement des cales de fermeture. Ces dispositifs qui sont retirés juste avant la mise en place des cales de fermeture permettent d'aider au compactage de la préforme fibreuse.

De même, des barres de maintien peuvent avantageusement être positionnées sur certaines cales de compactage préalablement à l'assemblage du couvercle supérieur sur l'auge afin également d'aider au compactage de la préforme fibreuse avant la fermeture complète du moule.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue en perspective d'une préforme fibreuse destinée à la fabrication d'une aube de redresseur de turbomachine ;
- les figures 2 et 3 sont des vues, respectivement de dessus et en coupe, d'un moule de compactage et d'injection selon l'invention destiné à recevoir la préforme fibreuse de la figure 1 ; et
- les figures 4 et 5 sont des vues, respectivement de dessus et en coupe, d'un moule de compactage et d'injection selon une variante de réalisation l'invention.

### Description détaillée de modes de réalisation

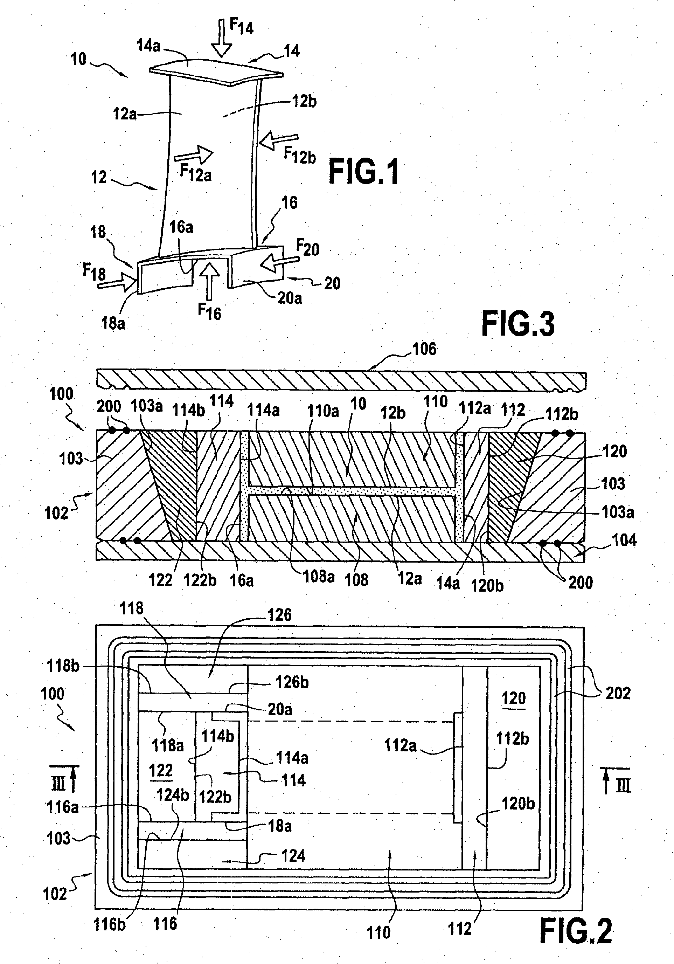

L'invention est applicable à des préformes fibreuses destinées à la fabrication de différentes pièces de turbomachine en matériau composite, par exemple à une préforme fibreuse 10 destinée à la réalisation d'une aube directrice de sortie de redresseur (ou OGV pour « Outlet Guide Vane ») du compresseur basse-pression d'une turbomachine aéronautique telle que celle représentée sur la figure 1.

De manière connue, la préforme fibreuse 10 d'une telle aube comprend une partie 12 constitutive de pale, une partie 14 constitutive de plateforme supérieure formée à une extrémité radiale externe de la pale, une partie 16 constitutive de plateforme inférieure formée à une extrémité radiale interne de la pale, une partie 18 constitutive de bride amont prolongeant vers l'amont la plateforme inférieure, et une partie 20 constitutive de bride aval prolongeant vers l'aval la plateforme inférieure.

L'ensemble de ces différentes parties de la préforme définit six surfaces à compacter à l'intérieur du moule préalablement à l'injection de la résine, à savoir : les surfaces intrados 12a et extrados 12b de la partie 12 constitutive de pale, la surface externe 14a de la partie 14 constitutive de plateforme supérieure, la surface interne 16a de la partie 16 constitutive de plateforme inférieure, et les surfaces latérales amont 18a et aval 20a des parties 18, 20 constitutives des brides amont et aval.

Plus précisément, les efforts à appliquer à l'intérieur du moule de compactage doivent être dirigés selon des directions normales à ces surfaces. A titre indicatif, ils sont schématisés sur la figure 1 par les six flèches respectives F₁₂ₐ, F_{12b}, F₁₄, F₁₆, F₁₈ et F₂₀.

La préforme fibreuse 10 ainsi détaillée peut être obtenue directement par tissage tridimensionnel de fils (formés par exemple de fibres de carbone) ou par drapage de tissus fibreux bidimensionnels. Une fois la préforme réalisée, elle est placée à l'intérieur d'un moule de compactage et d'injection décrit ci-après. Puis, une résine thermodurcissable (par exemple appartenant à la famille des époxydes ou des bismaléimides) est injectée à l'intérieur du moule pour imprégner la préforme et l'ensemble est chauffé afin de polymériser la résine. Après cette étape de polymérisation, le moule est ouvert et la pièce finale moulée qui en est extraite forme une aube directrice de sortie de compresseur basse-pression aux formes et aux dimensions requises pour être utilisée.

Un exemple de réalisation d'un moule de compactage et d'injection selon l'invention est illustré de façon schématique sur les figures 2 et 3. Pour des raisons de clarté, les circuits d'acheminement de la résine à l'intérieur du moule ne sont pas représentés.

Le moule de compactage et d'injection 100 comprend différentes parties assemblées entre elles, notamment une carcasse 102 formant auge, un couvercle inférieur 104, un couvercle supérieur 106, des cales de compactage 108 à 118 et des cales de fermeture 120 à 126.

L'auge 102 présente une forme sensiblement rectangulaire avec des parois latérales 103. Associée au couvercle inférieur 104 sur lequel elle est assemblée de façon étanche, elle forme un récipient à l'intérieur duquel est disposée la préforme fibreuse 10 et les différentes cales de compactage et de fermeture. Le couvercle supérieur 106 est quant à lui assemblé sur les parois latérales 103 de l'auge pour fermer le moule de façon étanche.

Dans cet exemple de réalisation, les cales de compactage sont au nombre de six et viennent chacune exercer en situation à l'intérieur du moule un effort de compactage sur l'une des surfaces à compacter 12a à 20a de la préforme fibreuse 10 selon les directions représentées par les flèches F₁₂ₐ à F₂₀ sur la figure 1.

Plus particulièrement, une première cale de compactage 108 présente une surface 108a venant en appui contre la surface intrados 12a de la partie de la préforme constitutive de la pale, tandis qu'une deuxième cale de compactage 110 possède une surface 110a qui vient en appui contre la surface 12b de la partie de la préforme constitutive de l'extrados de pale.

Une troisième cale de compactage 112 comprend une surface 112a venant en appui contre la surface 14a de la partie de la préforme fibreuse constitutive de la plateforme supérieure. De même, une quatrième cale de compactage 114 comporte une surface 114a qui vient en appui contre la surface 16a de la partie de la préforme constitutive de la plateforme inférieure.

Enfin, une cinquième 116 et une sixième 118 cales de compactage présentent chacune une surface 116a, 118a qui vient en appui contre les surfaces 18a, 20a des parties respectives de la préforme constitutives des brides amont et aval.

De la sorte, l'ensemble des surfaces à compacter 12a à 20a de la préforme fibreuse 10 peuvent être compactées par application de ces cales de compactage selon des directions sensiblement perpendiculaires à ces surfaces.

Les cales de fermeture 120 à 126 sont ici au nombre de quatre et servent à maintenir les cales de compactage en appui contre les différentes surfaces à compacter de la préforme fibreuse. Ces cales de fermeture sont intercalées entre les parois latérales 103 de l'auge et les cales de compactage. En situation à l'intérieur du moule, elles sont donc dépourvues de surface de contact avec la préforme fibreuse.

Ainsi, une première cale de fermeture 120 présente une surface 120b destinée à venir en appui normal contre une surface 112b de la troisième cale de compactage 112 opposée à la surface 112a. Une deuxième cale de fermeture 122 possède une surface 122b destinée à venir en appui normal contre une surface 114b de la quatrième cale de compactage 114 opposée à la surface 114a. Enfin, une troisième 124 et une quatrième 126 cales de fermeture présentent chacune une surface 124b, 126b destinée à venir en appui normal contre une surface 116b, 118b respectivement de la cinquième 116 et sixième 118 cales de compactage opposée à la surface 116a, 118a.

L'ordre d'assemblage d'un tel moule peut être le suivant. Dans un premier temps, l'auge 102 est montée de façon étanche sur le couvercle inférieur 104, par exemple par l'intermédiaire de joints 200 venant se loger dans des rainures circonférentielles 202 pratiquées sur tout le pourtour de l'auge. La première cale de compactage 108 est ensuite positionnée à l'intérieur de l'auge sensiblement au centre de celleci. La préforme fibreuse 10 est alors disposée à l'intérieur de l'auge avec la partie constitutive de pale reposant par sa surface intrados 12a sur la surface 108a de la première cale de compactage. Puis les autres cales de compactage 110 à 118 sont tour à tour positionnées à l'intérieur de l'auge avec leurs surfaces d'appui respectives en appui contre les surfaces à compacter de la préforme fibreuse.

Une fois les cales de compactage correctement positionnées, les cales de fermeture sont à leur tour disposées dans l'auge en les intercalant entre les parois latérales 103 de celle-ci et les cales de compactage. Le couvercle supérieur 106 du moule est alors assemblé de manière étanche sur l'auge pour fermer le moule, par exemple par des joints 200 logés dans des rainures 202. Celui-ci peut alors être branché au circuit d'acheminement de résine pour réaliser l'injection de résine. Une fois réalisées les étapes d'injection et de polymérisation, le moule est rouvert et la pièce finie formant une aube aux formes et dimensions finales en est extraite.

On décrira maintenant différentes caractéristiques avantageuses du moule de compactage et d'injection selon l'invention.

Selon une disposition avantageuse de l'invention, les cales de compactage 108 à 118 et les cales de fermeture 120 à 126 présentent un coefficient de dilatation thermique qui est supérieur à celui de l'auge 102 et des couvercles 104, 106. De la sorte, le moule peut être fermé « à froid » sans compacter complètement la préforme fibreuse, le compactage final se produisant « à chaud » lors de l'étape de polymérisation de la résine.

On pourra ainsi choisir des matériaux à faible coefficient de dilatation thermique pour l'auge et les couvercles (par exemple l'acier, l'invar ou un composite) et des matériaux à fort coefficient de dilatation thermique pour les cales de compactage et de fermeture (par exemple l'aluminium ou le silicone).

Comme représenté sur la figure 3, la surface intérieure 103a des parois latérales 103 de l'auge peut être inclinée par rapport à un plan normal aux couvercles inférieur et supérieur du moule afin de faciliter l'insertion des cales de fermeture à l'intérieur du moule ainsi que leur extraction lors du démoulage.

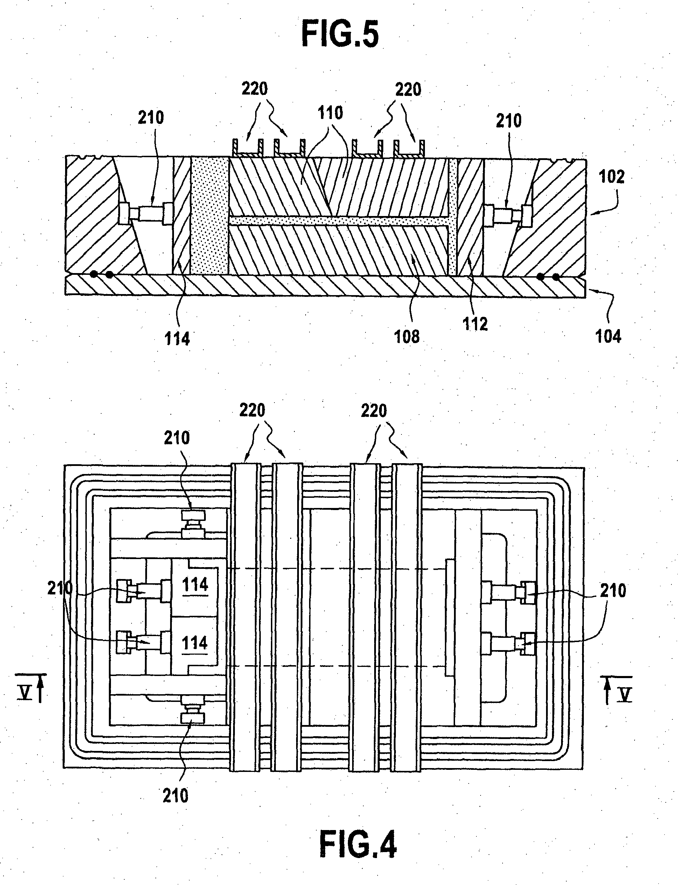

Dans la variante de réalisation des figures 4 et 5, la deuxième cale de compactage 110, ainsi que la quatrième cale de compactage 114 sont chacune formées de deux parties distinctes l'une de l'autre, ce qui facilite leur démoulage.

Toujours dans cette variante de réalisation, préalablement au positionnement des cales de fermeture, il est prévu de disposer à l'intérieur de l'auge des dispositifs 210 pour appliquer un effort normal sur les cales de compactage 108 à 118. Ces dispositifs 210 permettent d'aider au compactage de la préforme fibreuse dans le moule avant la mise en place des cales de fermeture (les dispositifs sont retirés juste avant de positionner ces cales de fermeture).

De tels dispositifs, également appelés écarteurs, sont des systèmes de type vis/écrou dont une extrémité est positionnée dans des logements formés dans les parois latérales 103 de l'auge et l'autre extrémité vient exercer un effort sur les cales de compactage selon une direction sensiblement perpendiculaire à celles-ci. Dans l'exemple de réalisation des figures 4 et 5, ces dispositifs sont au nombre de six.

De même, toujours comme représenté sur les figures 4 et 5, des barres de maintien 220 peuvent avantageusement être positionnées sur certaines cales de compactage préalablement à l'assemblage du couvercle supérieur sur l'auge afin également d'aider au compactage de la préforme fibreuse avant la fermeture complète du moule.

De telles barres de maintien 220 sont par exemple des poutrelles en I à profil normal en acier qui sont couramment utilisées dans le domaine de construction. Elles peuvent être simplement posées sur la deuxième cale de compactage 110.

## Revendications

1. Moule de compactage et d'injection (100) pour préforme fibreuse destinée à la fabrication d'une pièce de turbomachine en matériau composite, **caractérisé en ce que** le moule comprend une carcasse (102) formant auge destinée à recevoir la préforme fibreuse et fermée par un couvercle inférieur (104) et un couvercle supérieur (106) sensiblement plans, des cales de compactage (108 à 118) disposées à l'intérieur de l'auge avec chacune une surface (108a à 118a) en appui normal contre une surface (12a à 20a) à compacter de la préforme fibreuse, et des cales de fermeture (120 à 126) disposées à l'intérieur de l'auge, chaque cale de fermeture ayant une surface (120b à 126b) en appui normal contre une surface (112b à 118b) d'une cale de compactage et étant dépourvue de surface en contact avec la préforme fibreuse.

2. Moule selon la revendication 1, dans lequel les cales de compactage et les cales de fermeture présentent un coefficient de dilatation thermique supérieur à celui de l'auge et des couvercles.

3. Moule selon l'une des revendications 1 et 2, dans lequel l'auge (102) comprend des parois latérales (103) dont la surface intérieure (103a) est sensiblement inclinée par rapport à un plan normal aux couvercles inférieur et supérieur.

4. Moule selon l'une des revendications 1 à 3, dans lequel la préforme fibreuse est destinée à la fabrication d'une aube de turbomachine, le moule comprenant une première cale de compactage (108) ayant une surface (108a) destinée à venir en appui normal contre une surface (12a) de la préforme fibreuse constitutive de l'intrados de la pale de l'aube, une deuxième cale de compactage (110) ayant une surface (110a) destinée à venir en appui normal contre une surface (12b) de la préforme fibreuse constitutive de l'extrados de la pale de l'aube, une troisième cale de compactage (112) ayant une surface (112a) destinée à venir en appui normal contre une surface (14a) de la préforme fibreuse constitutive de la plateforme supérieure de l'aube, une quatrième cale de compactage (114) ayant une surface (114a) destinée à venir en appui normal contre une surface (16a) de la préforme fibreuse constitutive de la plateforme inférieure de l'aube, et une cinquième (116) et une sixième (118) cales de compactage ayant des surfaces (116a, 118a) destinées à venir en appui normal contre des surfaces (18a, 20a) de la préforme fibreuse constitutives des brides amont et aval de l'aube.

5. Moule selon la revendication 4, dans lequel au moins l'une des cales de compactage (110, 114) est formée en au moins deux parties distinctes de façon à faciliter leur démoulage.

6. Moule selon l'une des revendications 4 et 5, comprenant une première cale de fermeture (120) ayant une surface (120b) destinée à venir en appui normal contre une surface (112b) de la troisième cale de compactage (112) opposée à celle venant en appui contre la surface de la préforme fibreuse constitutive de la plateforme supérieure de l'aube, une deuxième cale de fermeture (122) ayant une surface (122b) destinée à venir en appui normal contre une surface (114b) de la quatrième cale de compactage (114) opposée à celle venant en appui contre la surface de la préforme fibreuse constitutive de la plateforme inférieure de l'aube, et une troisième (124) et une quatrième (126) cales de fermeture ayant des surfaces (124b, 126b) destinées à venir en appui normal contre des surfaces (116b, 118b) de la cinquième (116) et sixième (118) cales de compactage opposées à celles venant en appui contre les surfaces de la préforme fibreuse constitutives des brides amont et aval de l'aube.

7. Procédé d'assemblage d'un moule de compactage et d'injection selon l'une quelconque des revendications 1 à 6, consistant successivement à :
(a) assembler de façon étanche le couvercle inférieur (104) sur l'auge (102) ;
(b) positionner la préforme fibreuse (10) destinée à la fabrication d'une pièce de turbomachine et les cales de compactage (108 à 118) à l'intérieur de l'auge ;
(c) positionner les cales de fermeture (120 à 126) à l'intérieur de l'auge ; et
(d) assembler de façon étanche le couvercle supérieur (106) sur l'auge.

8. Procédé selon la revendication 7, dans lequel des dispositifs (210) pour appliquer un effort normal sur les cales de compactage sont positionnés à l'intérieur de l'auge préalablement au positionnement des cales de fermeture.

9. Procédé selon l'une des revendications 7 et 8, dans lequel des barres de maintien (220) sont positionnées sur certaines cales de compactage préalablement à l'assemblage du couvercle supérieur sur l'auge.

## Patentansprüche

1. Verdichtungs- und Spritzgussform (100) für einen Faservorformling, der zur Herstellung eines Turbomaschinenteils aus Verbundwerkstoff bestimmt ist, **dadurch gekennzeichnet, dass** die Form ein eine Mulde bildendes Gehäuse (102), das dazu bestimmt ist, den Faservorformling aufzunehmen, und das durch einen unteren Deckel (104) und einen oberen Deckel (106), die im Wesentlichen eben sind, verschlossen ist, innerhalb der Mulde angeordnete Verdichtungskeile (108 bis 118), jeweils mit einer Fläche (108a bis 118a) in normaler Anlage an einer zu verdichtenden Fläche (12a bis 20a) des Faservorformlings, sowie innerhalb der Mulde angeordnete Schließkeile (120 bis 126) umfasst, wobei jeder Schließkeil eine Fläche (120b bis 126b) hat, die in normaler Anlage an einer Fläche (112b bis 118b) eines Verdichtungskeils ist, und keine mit dem Faservorformling in Kontakt befindliche Fläche aufweist.

2. Form nach Anspruch 1, wobei die Verdichtungskeile und die Schließkeile einen Wärmeausdehnungskoeffizienten aufweisen, der höher als derjenige der Mulde und der Deckel ist.

3. Form nach einem der Ansprüche 1 und 2, wobei die Mulde (102) Seitenwände (103) umfasst, deren Innenfläche (103a) gegenüber einer zu dem unteren und dem oberen Deckel normalen Ebene deutlich geneigt ist.

4. Form nach einem der Ansprüche 1 bis 3, wobei der Faservorformling zur Herstellung einer Turbomaschinenschaufel bestimmt ist, wobei die Form einen ersten Verdichtungskeil (108) mit einer Fläche (108a), die dazu bestimmt ist, in normaler Anlage an eine Fläche (12a) des Faservorformlings, welche die Vorderseite des Blattes der Schaufel bildet, zu gelangen, einen zweiten Verdichtungskeil (110) mit einer Fläche (110a), die dazu bestimmt ist, in normaler Anlage an eine Fläche (12b) des Faservorformlings, welche die Rückseite des Blattes der Schaufel bildet, zu gelangen, einen dritten Verdichtungskeil (112) mit einer Fläche (112a), die dazu bestimmt ist, in normaler Anlage an eine Fläche (14a) des Faservorformlings, welche die obere Plattform der Schaufel bildet, zu gelangen, einen vierten Verdichtungskeil (114) mit einer Fläche (114a), die dazu bestimmt ist, in normaler Anlage an eine Fläche (16a) des Faservorformlings, welche die untere Plattform der Schaufel bildet, zu gelangen, sowie einen fünften (116) und einen sechsten (118) Verdichtungskeil mit Flächen (116a, 118a), die dazu bestimmt sind, in normaler Anlage an Flächen (18a, 20a) des Faservorformlings, welche den stromaufwärtigen und den stromabwärtigen Flansch der Schaufel bilden, zu gelangen, umfasst.

5. Form nach Anspruch 4, wobei wenigstens einer der Verdichtungskeile (110, 114) aus wenigstens zwei separaten Teilen gebildet ist, um deren Ausformen zu erleichtern.

6. Form nach einem der Ansprüche 4 und 5, umfassend einen ersten Schließkeil (120) mit einer Fläche (120b), die dazu bestimmt ist, in normaler Anlage an eine Fläche (112b) des dritten Verdichtungskeils (112) zu gelangen, die derjenigen gegenüberliegt, die in Anlage an die die obere Plattform der Schaufel bildende Fläche des Faservorformlings gelangt, einen zweiten Schließkeil (122) mit einer Fläche (122b), die dazu bestimmt ist, in normaler Anlage an eine Fläche (114b) des vierten Verdichtungskeils (114) zu gelangen, die derjenigen gegenüberliegt, die in Anlage an die die untere Plattform der Schaufel bildende Fläche des Faservorformlings gelangt, sowie einen dritten (124) und einen vierten (126) Schließkeil mit Flächen (124b, 126b), die dazu bestimmt sind, in normaler Anlage an Flächen (116b, 118b) des fünften (116) und des sechsten (118) Verdichtungskeils zu gelangen, die denjenigen gegenüberliegen, die in Anlage an die Flächen des Faservorformlings, welche den stromaufwärtigen und den stromabwärtigen Flansch der Schaufel bilden, gelangen.

7. Verfahren zum Zusammenbau einer Verdichtungs- und Spritzgussform nach einem der Ansprüche 1 bis 6, das nacheinander darin besteht:
(a) den unteren Deckel (104) an der Mulde (102) dicht zu montieren,
(b) den Faservorformling (10), der zur Herstellung eines Turbomaschinenteils bestimmt ist, und die Verdichtungskeile (108 bis 118) in der Mulde zu positionieren,
(c) die Schließkeile (120 bis 126) in der Mulde zu positionieren und
(d) den oberen Deckel (106) an der Mulde dicht zu montieren.

8. Verfahren nach Anspruch 7, wobei Vorrichtungen (210) zum Anlegen einer Normalkraft an die Verdichtungskeile vor dem Positionieren der Schließkeile in der Mulde positioniert werden.

9. Verfahren nach einem der Ansprüche 7 und 8, wobei Haltestangen (220) vor dem Montieren des oberen Deckels an der Mulde an einigen Verdichtungskeilen positioniert werden.

## Claims

1. A compacting and injection mold (100) for a fiber preform for use in fabricating a turbine engine part out of composite material, the mold being **characterized in that** it comprises a shell (102) forming a trough that is to receive the fiber preform and that is closed by substantially plane bottom and top covers (104, 106), compacting blocks (108 to 118) arranged inside the trough each having a surface (108a to 118a) pressing normally against a surface (12a to 20a) of the fiber preform that is to be compacted, and closure blocks (120 to 126) arranged inside the trough, each closure block having a surface (120b to 126b) pressing normally against a surface (112b to 118b) of a compacting block and not having a surface in contact with the fiber preform.

2. A mold according to claim 1, wherein the compacting blocks and the closure blocks present a coefficient of thermal expansion that is greater than that of the trough and of the covers.

3. A mold according to claim 1 or claim 2, wherein the trough (102) has side walls (103) with inside surfaces (103a) that slope perceptibly relative to a plane normal to the bottom and top covers.

4. A mold according to any one of claims 1 to 3, wherein the fiber preform is for fabricating a turbine engine vane, and the mold comprises a first compacting block (108) having a surface (108a) for pressing normally against a surface (12a) of the fiber preform constituting the pressure side of the airfoil of the vane, a second compacting block (110) having a surface (110a) for pressing normally against a surface (12b) of the fiber preform constituting the suction side of the airfoil of the vane, a third compacting block (112) having a surface (112a) for pressing normally against a surface (14a) of the fiber preform constituting the top platform of the vane, a fourth compacting block (114) having a surface (114a) for pressing normally against a surface (16a) of the fiber preform constituting the bottom platform of the vane, and fifth and sixth compacting blocks (116, 118) having surfaces (116a, 118a) for pressing normally against respective surfaces (18a, 20a) of the fiber preform constituting upstream and downstream flanges of the vane.

5. A mold according to claim 4, wherein at least one of the compacting blocks (110, 114) is made up of at least two distinct portions in order to facilitate unmolding thereof.

6. A mold according to claim 4 or claim 5, having a first closure block (120) having a surface (120b) for pressing normally against a surface (112b) of the third compacting block (112) remote from its surface pressing against the surface of the fiber preform constituting the top platform of the vane, a second closure block (122) having a surface (122b) for pressing normally against a surface (114b) of the fourth compacting block (114) remote from its surface pressing against the surface of the fiber preform constituting the bottom platform of the vane, and third and fourth closure blocks (124, 126) having surfaces (124b, 126b) for pressing normally against respective surfaces (116b, 118b) of the fifth and sixth compacting blocks (116, 118) remote from their surfaces pressing against the surfaces of the fiber preform constituting the upstream and downstream flanges of the vane.

7. A method of assembling a compacting and injection mold according to any one of claims 1 to 6, the method comprising the following steps in succession:
a) assembling the bottom cover (104) in leaktight manner on the trough (102);
b) positioning the fiber preform (10) that is for use in fabricating a turbomachine part together with the compacting blocks (108 to 118) inside the trough;
c) positioning the closure blocks (120 to 126) inside the trough; and
d) assembling the top cover (106) in leaktight manner on the trough.

8. A method according to claim 7, wherein presser devices (210) for applying normal forces on the compacting blocks are positioned inside the trough prior to positioning the closure blocks.

9. A method according to claim 7 or claim 8, wherein holder bars (220) are positioned on some of the compacting blocks prior to assembling the top cover on the trough.
